# EUROPÄISCHE PATENTANMELDUNG

(11) **EP 3 764 501 A1**
(43) Veröffentlichungstag der Anmeldung: **13.01.2021**
(21) Anmeldenummer: 19185154.2
(22) Anmeldetag: 09.07.2019
(51) Int. Cl.: H02J 3/06, H02J 3/16

(54) **VERFAHREN UND LEITSTELLENANORDNUNG ZUR STEUERUNG EINES ELEKTRISCHEN ENERGIEÜBERTRAGUNGSNETZES SOWIE COMPUTERPROGRAMMPRODUKT**

(71) Anmelder: Siemens Aktiengesellschaft, 80333 München (DE)
(72) Erfinder: Lecek, Nenad, 90471 Nürnberg (DE); Reischböck, Markus, 91056 Erlangen (DE); Glamocic, Ljiljana, 91207 Lauf a.d. Pegnitz (DE); Goller, Andre, 91126 Rednitzhembach (DE); Lösel, Sören, 90596 Schwanstetten (DE); Zöller, Henriette, 91056 Erlangen (DE)

(57) **Zusammenfassung**

Gegenstand der vorliegenden Erfindung ist ein Verfahren zur Steuerung eines elektrischen Energieverteilungsnetzes (1) mittels einer Leitstellenanordnung mit den Schritten:
- Bereitstellen eines Wirkleistungszielwerts und eines Blindleistungszielwerts an einer Übergabestelle zwischen dem Energieverteilungsnetz (1) und einem elektrischen Energietransportnetz (4) mittels einer Zielwerteinrichtung, wobei die Zielwerte jeweils derart auf das Energietransportnetz (4) abgestimmt sind, dass Rückwirkungen auf das Energietransportnetz (4) verhindert werden, die zu Störungen des Energietransportnetzes führen könnten, und
- Vergleichen des Wirkleistungszielwerts mit einem aktuellen Wirkleistungswert und des Blindleistungszielwerts mit einem aktuellen Blindleistungswert an der Übergabestelle (3) zwischen Energieverteilungsnetz (1) und Energietransportnetz (4) mittels einer Vergleichseinrichtung, und
- im Fall einer Abweichung der aktuellen Werte von den Zielwerten: Durchführen einer Optimierungsberechnung für Wirkleistungswert und Blindleistungswert im Energieverteilungsnetz (1) mittels einer Optimierungseinrichtung, um die Abweichung jeweils zu verringern oder zu beseitigen, wobei als Ergebnis der Optimierungsberechnung Schaltbefehle für steuerbare Betriebsmittel bereitgestellt werden, und
- Übermitteln der Schaltbefehle an die Betriebsmittel mittels einer Steuereinrichtung.

Ferner ist Gegenstand der vorliegenden Erfindung eine entsprechende Leitstellenanordnung sowie eine entsprechendes Computerprogrammprodukt.

## Beschreibung

Die Erfindung betrifft ein Verfahren zur Steuerung eines elektrischen Energieübertragungsnetzes mittels einer Leitstellenanordnung gemäß Anspruch 1 sowie eine Leitstellenanordnung gemäß Anspruch 8 und ein Computerprogrammprodukt gemäß Anspruch 15.

Aus der Produktbroschüre "Spektrum Power ADMS - The platform to meet future distribution operation needs", Siemens Industry, Inc. 2017, Article no. EMDG-B935-00-4AUS, ist eine Leitstellensoftware zur Steuerung eines Energieübertragungsnetzes bekannt. Auf Seite 11 der Broschüre ist einer Figur dargestellt, dass im Rahmen einer Zustandsschätzung über das Energieverteilungsnetz Spannungsbandverletzungen, d.h. signifikante Abweichungen von der Nennspannung des Energieübertragungsnetzes, abgeschätzt werden können. Diesen Spannungsbandverletzungen kann mittels einer so genannten "Volt/Var Control", d.h. einer Blindleistungskompensation mittels geeigneter Blindleistungsquellen wie etwa stufenweise schaltbaren Transformatoren oder Ähnlichem, entgegengewirkt werden. Die grundsätzliche Funktionsweise der Volt/Var Control ist beispielsweise aus dem Wikipedia Artikel "Distribution Management System" auf Seite 3 bekannt: es werden beispielsweise Kondensatorbänke, Netzregler oder Transformatoren mit Stufenschalter zur Blindleistungskompensation eingesetzt.

Aus der Veröffentlichung "Volt/Var Control Algorithm for Modern Distribution Management System" von Roytelman et al., IEEE Transactions on Power Systems, Vol. 10, No. 3, August 1995, ist ein Verfahren zur Volt-Var Control von Verteilnetzen bekannt. Zur Berechnung einer optimierten Lösung von Schalthandlungen, die ein Verteilnetz unter Einhaltung von Randbedingungen wie etwa vorgegebenen Maximalspannungen an allen Netzwerkbussen, auf eine Zielfunktion optimieren, wird insbesondere eine "oriented discrete coordinate descent method" vorgeschlagen. Schalthandlungen sind z.B. Zu- oder Abschalten von Kondensatoren und Verändern der Übersetzung eines stufenweise schaltbaren Transformators. Die Zielfunktion umfasst z.B. einen minimalen Leistungsverlust des Verteilnetzes, Beseitigung von Überschreitungen vorgegebener maximaler Spannungen und ein Benötigen möglichst weniger Schalthandlungen.

Ausgehend von der bekannten Leitstellensoftware ADMS stellt sich an die Erfindung die Aufgabe, ein vergleichsweise einfaches Verfahren zur Steuerung eines elektrischen Energieverteilungsnetzes anzugeben, mit dem Störungen in einem übergeordneten Energietransportnetz vermieden werden können.

Die Erfindung löst diese Aufgabe durch ein Verfahren gemäß Anspruch 1.

Eine Leitstellenanordnung im Sinne der Erfindung kann beispielsweise ein so genanntes "Supervisory Control and Data Acqusition" (SCADA) System sein. Beispielsweise kann dieses in einer Leitstellensoftware, wie dem eingangs genannten ADMS implementiert sein.

Eine Steuereinrichtung ist eine Rechnereinrichtung, die Schaltbefehle entweder direkt für steuerbare Betriebsmittel wie z.B. Transformatoren oder indirekt für dem jeweiligen Betriebsmittel zugeordnete lokale Steuergeräte erstellt. Schaltbefehle können beispielsweise an die folgenden Betriebsmittel gerichtet werden, insbesondere wenn diese vertraglich vereinbart durch die Leitstellenanordnung gesteuert werden dürfen: Transformatoren mit Stufenschalter, Batterien, Kondensatoren, Leistungsschalter ("Switches"), Lasten / Verbraucher, Generatoren / Energieerzeuger. Als Energieerzeuger im Verteilnetz kommen insbesondere Photovoltaikanlagen und Windkraftanlagen in Frage.

Die Leitstellenanordnung weist dabei z.B. eine Kommunikationseinrichtung auf, die in der Lage ist, von einer Leitstelle des übergeordneten Energietransportnetzes Datentelegramme mit den jeweiligen Zielwerten zu empfangen.
Ferner kann die Steuereinrichtung Steuerbefehle an Betriebsmittel zu senden, beispielsweise nach dem IEC 61850 Standard oder per TCP/IP oder Ethernet.

Die erfindungsgemäß vorgesehenen Einrichtungen, wie beispielsweise die Zielwerteinrichtung, die Vergleichseinrichtung und die Optimierungseinrichtung können z.B. Softwarekomponenten innerhalb eines komplexeren Softwareleitstellensystems sein. Es kann sich auch um in einer Servereinrichtung, wie beispielsweise einer Cloud-Applikation, implementierte Softwarekomponenten handeln. Eine Cloud im Sinne der Erfindung ist ein System mit räumlich verteilten Rechner- und Datenspeicherressourcen, die über einen Datennetzwerk verbunden sind. Ferner können die genannten Einrichtungen auch als einzelne Rechnereinrichtungen mit Prozessormitteln und Datenspeichermitteln, wie beispielsweise einer HDD oder einer SSD, vorgesehen sein.

Die Optimierungseinrichtung führt beispielsweise eine Volt/Var Optimierung aus, wie sie für Energieverteilungsnetze aus dem eingangs erwähnten ADMS bekannt ist.

Ein elektrisches Energieverteilungsnetz ist typischerweise ein Mittelspannungsnetz mit z.B. 33 kV Nennspannung, das beispielsweise eine Stadt versorgt. Ein elektrisches Energietransportnetz ist typischerweise ein Hochspannungsnetz mit z.B. 220 kV oder 110 kV Nennspannung. Das Hochspannungsnetz und das Mittelspannungsnetz sind an Übergabestellen verbunden, die einen Transformator und weitere elektrische Betriebsmittel aufweisen. In vielen Ländern wie z.B. Deutschland sehen gesetzliche Regelungen ein sog. "unbundling" der beiden Netze vor, d.h. dass verschiedenen Unternehmen die Netze betreiben müssen. Dies erschwert eine optimierte und koordinierte Steuerung der Verteilnetzebene und der Transportnetzebene.

Erfindungsgemäß werden seitens der Leitstelle des Transportnetzes Zielwerte bzw. zulässige Betriebsparameter des Verteilnetzes an der Übergabestelle zum Transportnetz vorgegeben. Auf diese Weise wird beispielsweise eine problematische Rückspeisung von elektrischer Energie in das Transportnetz vermieden, die z.B. bei starker Energieerzeugung durch regenerative Energiequellen wie Windkraftanlagen und Solaranlagen entstehen kann. Eine solche Rückspeisung kann die Stabilität des Transportnetzes beeinflussen. Transportnetzbetreiber haben aufgrund ihrer großflächigen Verantwortung für viele Verbraucher strenge Sicherheitsvorgaben, um Netzausfälle zu vermeiden. Im Rahmen der Erfindung können seitens des Transportnetzbetreibers z.B. durch Planungsrechnungen oder Simulationen zulässige Betriebsparameter des Verteilnetzes an der Übergabestelle vorgeschlagen und mit dem Verteilnetzbetreiber abgestimmt werden. Die Leitstellenanordnung des Verteilnetzes hat dann die Aufgabe, diese Zielwerte mittels einer Volt/Var-Control möglichst genau einzuhalten. Daher wird die erfindungsgemäß vorgeschlagenen Optimierung mittels Volt/Var-Control ausschließlich im Verteilnetz vorgenommen.

Eine Optimierungsberechnung für Spannung (U) und Blindleistung (Q) ist beispielsweise eine im Stand der Technik bekannte Volt-/Var Optimierung, z.B. die eingangs beschriebene Methode aus der Veröffentlichung von Roytelman et al.

Unter einem Leistungswert oder einer Leistung ist im Sinne der Erfindung, solange nichts anderes angegeben ist, ein Wirkleistungswert bzw. eine Wirkleistung zu verstehen.

In der Vergangenheit hatte die Optimierung im Verteilnetz in erster Linie das Ziel, Spannungs- und Lastgrenzen innerhalb des Verteilnetzes einzuhalten, Wirkleistungsverluste zu minimieren und Reserven (z.B. Spannungsreserven) für den sicheren Betrieb des Verteilnetzes zu gewährleisten. Mit dem zunehmenden Einfluss von dezentraler Energieerzeugung und einer damit einhergehenden Umkehr der Energieflussrichtung im Netz, werden Maßnahmen zur Begrenzung und Koordinierung der Rückspeisung ins Transportnetz immer wichtiger.

Die erfindungsgemäße Optimierung des Verteilnetzes unter Einhaltung von Zielwerten (z.B. Wirkleistung, Blindleistung und ggf. zusätzlich auch Leistungsfaktor bzw. "Powerfactor") an Übergabestellen vom Transportnetz zum Verteilnetz stellt eine Erweiterung der bisherigen Optimierung dar und adressiert damit die sich ändernden Anforderungen an den Betrieb von Verteilnetzen. Mit diesem Ansatz ist eine wirksame Methode zur Koordinierung des Verteilnetzes mit dem übergeordneten Übertragungsnetz entwickelt, wobei sowohl die Sicherheit als auch der optimale Betrieb beider Netze hinreichend berücksichtigt ist.

Es ist ein wesentlicher Vorteil der vorliegenden Erfindung, dass mittels der Blindleistungskompensation durch die Betriebsmittel schlussendlich Spannungsbandverletzungen, welche sich aus starken Abweichungen von zulässigen Betriebsparametern ergeben, entgegengewirkt werden kann.

In einer bevorzugten Ausführungsform des erfindungsgemäßen Verfahrens wird ein Leistungsfaktorzielwert an der Übergabestelle mittels der Zielwerteinrichtung bereitgestellt, der mittels der Vergleichseinrichtung mit einem aktuellen Leistungsfaktor an der Übergabestelle verglichen wird, wobei in der Optimierungsberechnung der Leistungsfaktor berücksichtigt wird, um eine Abweichung vom Leistungsfaktorzielwert zu verringern. Der Leistungsfaktorzielwert kann dabei alternativ zu einem der anderen beiden Zielwerte, also dem Wirkleistungszielwert und dem Blindleistungszielwert, verwendet werden. Dies ist möglich, weil von den drei Zielwerten Leistungsfaktorzielwert, Wirkleistungszielwert und Blindleistungszielwert nur zwei Zielwerte bekannt sein müssen, um in einem Zwischenschritt den dritten Zielwert berechnen zu können. Als Zielwerte können also (alternativ) angegeben werden:
1.) Leistungsfaktorzielwert und Wirkleistungszielwert, oder
2.) Leistungsfaktorzielwert und Blindleistungszielwert, oder
3.) Wirkleistungszielwert und Blindleistungszielwert.

In einer bevorzugten Ausführungsform des erfindungsgemäßen Verfahrens wird mittels der Optimierungsberechnung mindestens ein Spannungszielwert für das Energieverteilungsnetz berücksichtigt, wobei der Spannungszielwert an allen Messstellen im Energieverteilungsnetz einzuhalten ist. Dies ist ein Vorteil, weil die Einhaltung von Spannungsgrenzen für den Betrieb jedes Energienetzes wichtig ist. Es können für verschiedene Teilnetze z.B. unterschiedliche Spannungszielwerte vorgegeben sein. Typischerweise wird die Nennspannung des Energieverteilungsnetzes in der Optimierungsberechnung als Spannungszielwert berücksichtigt.

In einer bevorzugten Ausführungsform des erfindungsgemäßen Verfahrens wird für jeden Zielwert ein zulässiges Intervall mit einem minimalen und einem maximalen Wert gebildet. Beispielsweise sind damit eine absolute Untergrenze und eine absolute Untergrenze für den Zielwert an der jeweiligen Messstelle vorgegeben. Die Vorgabe kann dabei durch einen Nutzer erfolgen oder durch voreingestellte Standardwerte. Dies ist ein Vorteil, weil nicht jede Abweichung von einem zulässigen Wert eines Betriebsparameters automatisch zu Gegenmaßnahmen führt, die ggf. kleinste Abweichungen auch überkompensieren und damit die Problematik verstärken können.

In einer bevorzugten Ausführungsform des erfindungsgemäßen Verfahrens werden der minimale und maximale Wert jeweils unter Berücksichtigung einer Abweichung von 10% vom Zielwert bestimmt. Dies ist ein Vorteil, weil sich 10% als praktikabel und ausreichend genau für eine Regulierung erwiesen haben.

In einer anderen bevorzugten Ausführungsform des erfindungsgemäßen Verfahrens werden der minimale und maximale Wert jeweils unter Berücksichtigung einer Abweichung von 3% vom Zielwert bestimmt. Dies ist ein Vorteil, weil sich 3% als praktikabel und genauer für eine Regulierung erwiesen haben.

In einer bevorzugten Ausführungsform des erfindungsgemäßen Verfahrens basieren die aktuellen Werte an der Übergabestelle auf Messungen im Energieverteilungsnetz oder auf Schätzungen einer Zustandsschätzungseinrichtung. Als Zustandsschätzungseinrichtung kann beispielsweise ein aus der Veröffentlichung "Real-Time Distribution System State Estimation", Dzafic et al., 2010 IEEE 978-1-4244-7398-4, bekanntes "Distribution System State Estimator (DSSE)" System eingesetzt werden. Bevorzugt ist es ferner, wenn die aktuellen Betriebsparameter möglichst echtzeitnah im Verfahren bereitgestellt werden. Dies ermöglicht es im erfindungsgemäßen Verfahren rasch auf problematische Abweichungen von den vorgegebenen zulässigen Betriebsparametern zu reagieren.

In einer bevorzugten Ausführungsform des erfindungsgemäßen Verfahrens weisen die steuerbaren Betriebsmittel mindestens eines der folgenden Betriebsmittel auf: Kondensatoren, Stufenschalter von Transformatoren, Netzspannungsregler, intelligente Stromrichter, Leistungsschalter. Dies ist ein Vorteil, weil die genannten Betriebsmittel lange erprobt sind, um Blindleistungskompensation in Energieverteilungsnetzen durchzuführen.

Ferner stellt sich ausgehend von der bekannten Leitstellensoftware ADMS an die Erfindung die Aufgabe, eine Leitstellenanordnung zur Steuerung eines elektrischen Energieverteilungsnetzes anzugeben, mit der Störungen in einem übergeordneten Energietransportnetz vermieden werden können. Die Erfindung löst diese Aufgabe durch eine Leitstellenanordnung gemäß Anspruch 8.

Bevorzugte Ausführungsformen ergeben sich aus den abhängigen Ansprüchen 9 bis 14. Es ergeben sich dabei jeweils sinngemäß die gleichen Vorteile, wie eingangs für das erfindungsgemäße Verfahren geschildert.

Des Weiteren stellt sich an die Erfindung die Aufgabe, ein Computerprogrammprodukt anzugeben, mit dessen Hilfe das erfindungsgemäße Verfahren gemäß der Ansprüche 1 bis 7 durchgeführt werden kann. Die Erfindung löst diese Aufgabe durch ein Computerprogrammprodukt gemäß Anspruch 15, wobei sich sinngemäß die gleichen Vorteile, wie eingangs für das erfindungsgemäße Verfahren geschildert, ergeben.

Zur besseren Erläuterung der Erfindung zeigen in schematischer Darstellung die
- Figur 1: ein Beispiel für ein Energieverteilungsnetz mit Übergabestelle zu einem Energietransportnetz, und
- Figur 2: eine erste Ansicht einer Benutzeroberfläche einer Leitstellensoftware, und
- Figur 3: eine zweite Ansicht der Benutzeroberfläche gemäß Figur 2, und
- Figur 4: eine dritte Ansicht der Benutzeroberfläche gemäß Figur 2.

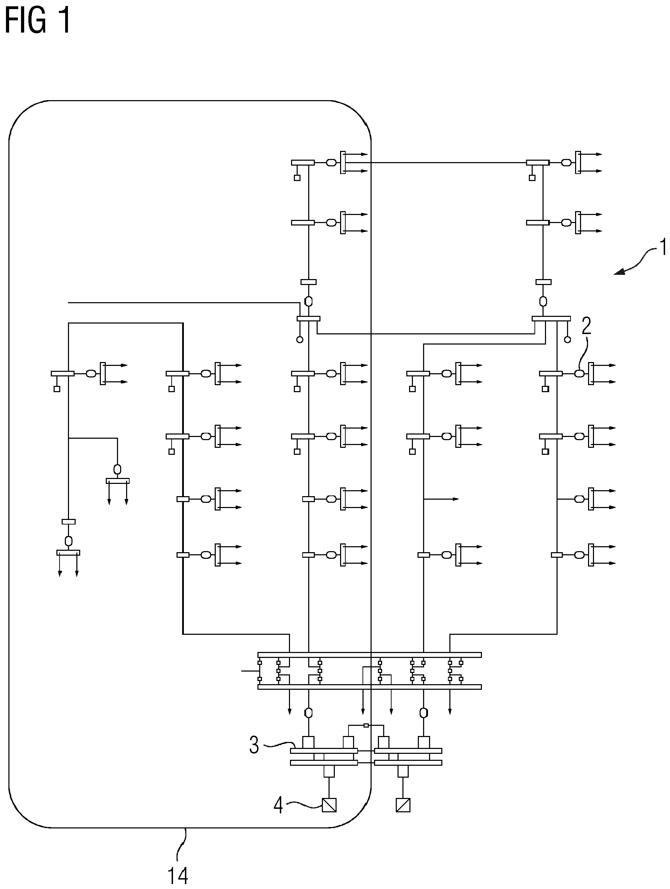

Die Figur 1 zeigt ein Energieverteilungsnetz 1 der Mittelspannungsebene mit z.B. 33 kV Nennspannung in einer single-line Darstellung, d.h. in einer zusammengefassten Darstellung mit nur einer Phase (es wird Symmetrie der drei Phasen angenommen). Transformatoren 2 übergeben die elektrische Leistung an die Niederspannungsebene (nicht dargestellt). Eine Übergabestelle 3 verbindet das Mittelspannungsnetz 1 mit einem übergeordneten Energietransportnetz 4 der Hochspannungsebene, das z.B. 110 kV Nennspannung aufweist. In dem gezeigten Beispiel lässt sich ein Teilnetz 14 umreißen, das einerseits einen großen Anteil des Energieverteilungs-netzes 1 und andererseits eine Übergabestelle 3 zum Energietransportnetz 4 aufweist. Für die Übergabestelle 3 sind durch Vorgaben aus der Netzleitstelle des Energietransportnetzes 4 Zielwerte für Wirkleistung und Blindleistung im Teilnetz 14 des Energieverteilungsnetzes 1 angegeben.

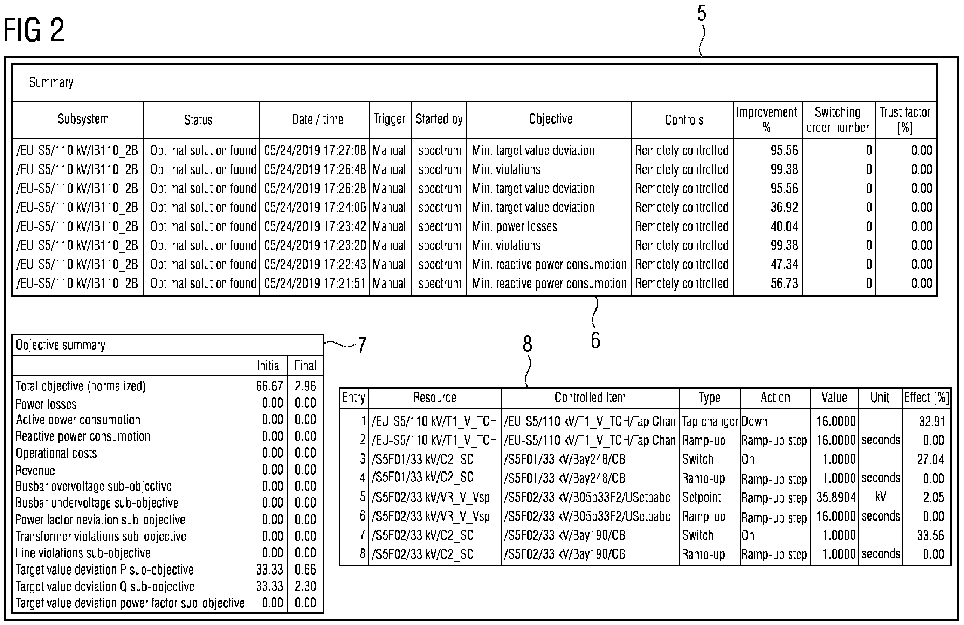

Die Figuren 2 bis 4 zeigen verschiedene Ansichten einer graphischen Benutzeroberfläche für eine Leitstellensoftware, mit der das erfindungsgemäße Verfahren eingesetzt werden kann. In dem folgenden Beispiel werden aus Lastflussberechnungen folgende Werte für das Energieverteilungsnetz an der Übergabestelle gemäß Figur 1 angenommen:

| | |
|---|---|
| Wirkleistung | P = 25428,21 kW |
| Blindleistung | Q = 17610,19 kVAr |

Für einen reibungslosen Betrieb des übergeordneten Energietransportnetzes werden von dessen Leitstelle mittels einer Zielwertnachricht, die von einer Kommunikationseinrichtung der übergeordneten Leitstelle des Transportnetzes zu einer Kommunikationseinrichtung einer Leitstelle des Verteilnetzes übermittelt wird, jedoch folgende Zielwerte mitgeteilt:
P* = 25000 kW
Q* = 8000 kVAr

Im Ergebnis wird der Zielwert für die Wirkleistung nur leicht überschritten, was im Normbetrieb i.d.R. tolerabel ist, während der Blindleistungszielwert um mehr als das Doppelte überschritten wird.

In dem Fenster "Summary" ist als Zielfunktion die oberste Zeile ausgewählt, nämlich "Min. target valure deviation". D.h., dass die Volt-Var Berechnung erfindungsgemäß versucht, das Verteilnetz durch Erteilen von Schaltbefehlen an Betriebsmittel derart zu steuern, so dass an der Übergabestelle 3 die vorgegebenen Zielwerte P* und Q* möglichst genau getroffen werden. Dabei wird i.d.R. auch das Einhalten von Spannungsgrenzen usw. als Randbedingung betrachtet.

In dem Fenster 7 "Objective Summary" in Figur 2 ist unter dem Reiter "Output" hervorzuheben, dass nun eine Optimierung der dritten und zweiten Zeile von unten, nämlich "Taget value deviation P sub-objective" und "Taget value deviation Q sub-objective", deutlich verbessert wurden. Die zu optimierende Funktion weicht gemäß Spalte "final" viel weniger von dem Angangswerten gemäß der Spalte "initial" ab. Das weitere Fenster 8 zeigt vorgeschlagene Schalthandlungen "switching actions" bzw. die aus Schaltbefehlen resultierenden Änderungen. Die Betriebsmittel umfassen insbesondere stufenweise schaltbare Transformatoren ("tap changer") und Kondensatorbänke, die über Schalter ("CB" für Circuit Breaker) gesteuert werden.

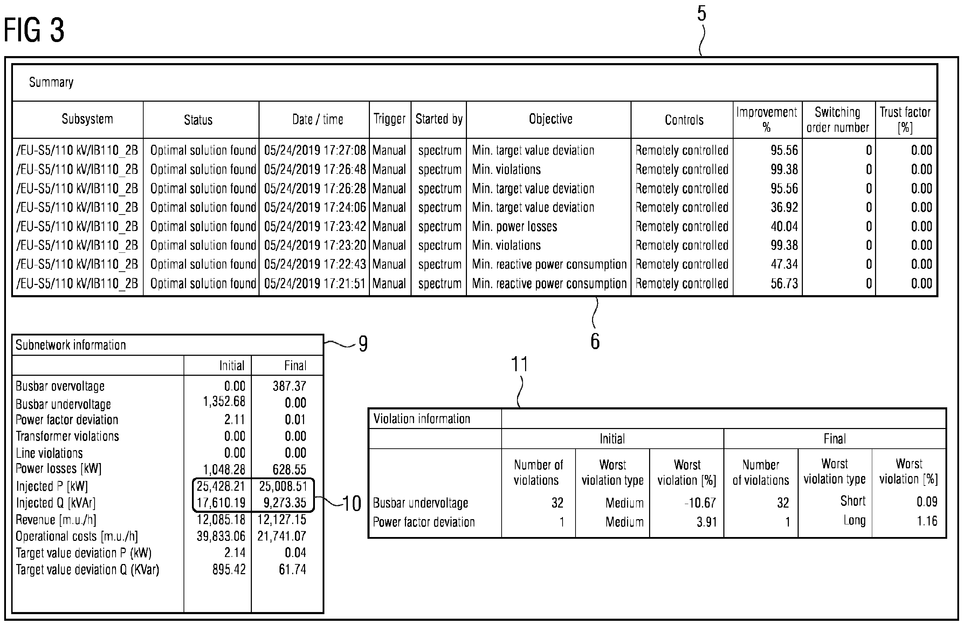

In der Figur 3 ist in dem Fenster 9 nun der Reiter Details ausgewählt. Mit der Markierung 10 sind die Werte für P und Q an der Übergabestelle ausgewählt. Durch die Optimierung können nun die Zielwerte des Energietransportnetzes wesentlich besser eingehalten werden (Spalte Final):

| | |
|---|---|
| Wirkleistung | P = 25008,51 kW |
| Blindleistung | Q = 9273,35 kVAr |

Es wird von den Zielwerten P* und Q* zwar noch abgewichen, aber deutlich weniger als zuvor. In Anbetracht der ebenfalls zu berücksichtigenden Spannungsverletzungen ("Violation Information" in Fenster 11) und der verfügbaren steuerbaren Betriebsmittel im Verteilnetz konnte kein besseres Ergebnis bzw. keine geringere Abweichung von den Zielwerten in der Optimierung erzielt werden.

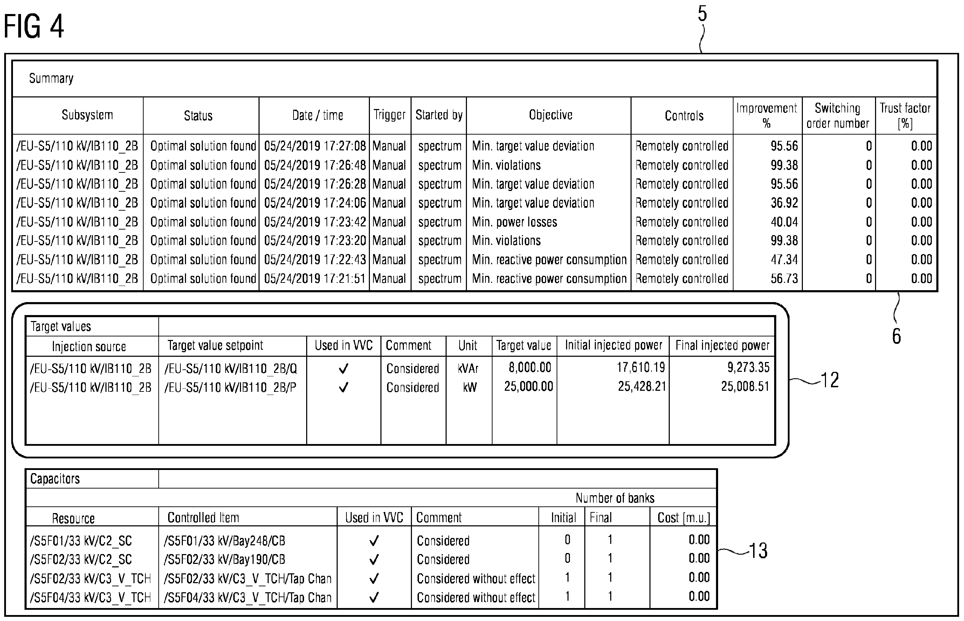

Das Ergebnis wird in Figur 4 im Fenster 12 "Target Values" noch einmal übersichtlich zusammengefasst. In dem Fenster 13 werden vier Kondensatorbänke gelistet, von denen die beiden oberen im Rahmen der Optimierung zugeschaltet wurden ("considered" und Wechsel von "initial" 0 zu "final" 1).

## Patentansprüche

1. Verfahren zur Steuerung eines elektrischen Energieverteilungsnetzes (1) mittels einer Leitstellenanordnung mit den Schritten:
- Bereitstellen eines Wirkleistungszielwerts und eines Blindleistungszielwerts an einer Übergabestelle zwischen dem Energieverteilungsnetz (1) und einem elektrischen Energietransportnetz (4) mittels einer Zielwerteinrichtung, wobei die Zielwerte jeweils derart auf das Energietransportnetz (4) abgestimmt sind, dass Rückwirkungen auf das Energietransportnetz (4) verhindert werden, die zu Störungen des Energietransportnetzes führen könnten, und
- Vergleichen des Wirkleistungszielwerts mit einem aktuellen Wirkleistungswert und des Blindleistungszielwerts mit einem aktuellen Blindleistungswert an der Übergabestelle (3) zwischen Energieverteilungsnetz (1) und Energietransportnetz (4) mittels einer Vergleichseinrichtung, und
- im Fall einer Abweichung der aktuellen Werte von den Zielwerten: Durchführen einer Optimierungsberechnung für Wirkleistungswert und Blindleistungswert im Energieverteilungsnetz (1) mittels einer Optimierungseinrichtung, um die Abweichung jeweils zu verringern oder zu beseitigen, wobei als Ergebnis der Optimierungsberechnung Schaltbefehle für steuerbare Betriebsmittel bereitgestellt werden, und
- Übermitteln der Schaltbefehle an die Betriebsmittel mittels einer Steuereinrichtung.

2. Verfahren nach Anspruch 1, **dadurch gekennzeichnet, dass** ein Leistungsfaktorzielwert an der Übergabestelle mittels der Zielwerteinrichtung bereitgestellt wird, der mittels der Vergleichseinrichtung mit einem aktuellen Leistungsfaktor an der Übergabestelle verglichen wird, wobei in der Optimierungsberechnung der Leistungsfaktor berücksichtigt wird, um eine Abweichung vom Leistungsfaktorzielwert zu verringern.

3. Verfahren nach Anspruch 1 oder 2, **dadurch gekennzeichnet, dass** mittels der Optimierungsberechnung mindestens ein Spannungszielwert für das Energieverteilungsnetz (1) berücksichtigt wird, wobei der Spannungszielwert an allen Messstellen im Energieverteilungsnetz (1) einzuhalten ist.

4. Verfahren nach einem der vorhergehenden Ansprüche, **dadurch gekennzeichnet, dass** für jeden Zielwert ein zulässiges Intervall mit einem minimalen und einem maximalen Wert gebildet wird.

5. Verfahren nach Anspruch 4, **dadurch gekennzeichnet, dass** der minimale und maximale Wert jeweils unter Berücksichtigung einer Abweichung von 10% vom Zielwert bestimmt werden.

6. Verfahren nach einem der vorhergehenden Ansprüche, **dadurch gekennzeichnet, dass** die aktuellen Werte an der Übergabestelle auf Messungen im Energieverteilungsnetz (1) oder auf Schätzungen einer Zustandsschätzungseinrichtung basieren.

7. Verfahren nach einem der vorhergehenden Ansprüche, **dadurch gekennzeichnet, dass** als steuerbare Betriebsmittel mindestens eines der folgenden Betriebsmittel eingesetzt wird: Kondensatoren, Stufenschalter von Transformatoren, Netzspannungsregler, intelligente Stromrichter, Leistungsschalter.

8. Leitstellenanordnung zur Steuerung eines elektrischen Energieverteilungsnetzes (1), aufweisend:
- eine Zielwerteinrichtung, die ausgebildet ist, einen Wirkleistungszielwert und einen Blindleistungszielwert an einer Übergabestelle zwischen dem Energieverteilungsnetz (1) und einem elektrischen Energietransportnetz (4) bereit zu stellen, wobei die Zielwerte jeweils derart auf das Energietransportnetz (4) abgestimmt sind, dass Rückwirkungen auf das Energietransportnetz (4) verhindert werden, die zu Störungen des Energietransportnetzes (4) führen könnten, und
- eine Vergleichseinrichtung, die ausgebildet ist, den Wirkleistungszielwert mit einem aktuellen Wirkleistungswert und den Blindleistungszielwert mit einem aktuellen Blindleistungswert an der Übergabestelle (3) zwischen Energieverteilungsnetz (1) und Energietransportnetz (4) zu vergleichen, und
- eine Optimierungseinrichtung, die ausgebildet ist, im Fall einer Abweichung der aktuellen Werte von den Zielwerten eine Optimierungsberechnung für Wirkleistungswert und Blindleistungswert im Energieverteilungsnetz (1) durchzuführen, um die Abweichung jeweils zu verringern oder zu beseitigen, wobei als Ergebnis der Optimierungsberechnung Schaltbefehle für steuerbare Betriebsmittel bereitgestellt werden, und
- eine Steuereinrichtung, die ausgebildet ist, die Schaltbefehle an die Betriebsmittel zu übermitteln.

9. Leitstellenanordnung nach Anspruch 8, **dadurch gekennzeichnet, dass**
die Zielwerteinrichtung ausgebildet ist, einen Leistungsfaktorzielwert an der Übergabestelle (3) bereitzustellen, und dass
die Vergleichseinrichtung ausgebildet ist, den Leistungsfaktorzielwert mit einem aktuellen Leistungsfaktor an der Übergabestelle zu vergleichen, und dass
die Optimierungseinrichtung ausgebildet ist, in der Optimierungsberechnung den Leistungsfaktor zu berücksichtigen, um eine Abweichung vom Leistungsfaktorzielwert zu verringern.

10. Leitstellenanordnung nach Anspruch 8 oder 9, **dadurch gekennzeichnet, dass**
die Optimierungseinrichtung ausgebildet ist, in der Optimierungsberechnung mindestens einen Spannungszielwert für das Energieverteilungsnetz (1) zu berücksichtigen, wobei der Spannungszielwert an allen Messstellen im Energieverteilungsnetz (1) einzuhalten ist.

11. Leitstellenanordnung nach einem der Ansprüche 8 bis 10, **dadurch gekennzeichnet, dass** die Zielwerteinrichtung ausgebildet ist, für jeden Zielwert ein zulässiges Intervall mit einem minimalen und einem maximalen Wert zu bilden.

12. Leitstellenanordnung nach einem der Ansprüche 8 bis 11, **dadurch gekennzeichnet, dass** die Zielwerteinrichtung ausgebildet ist, den minimalen und maximalen Wert jeweils unter Berücksichtigung einer Abweichung von 10% vom Zielwert zu bestimmen.

13. Leitstellenanordnung nach einem der Ansprüche 8 bis 12, **dadurch gekennzeichnet, dass** eine Zustandsschätzungseinrichtung ausgebildet ist, die aktuellen Werte an der Übergabestelle auf Messungen im Energieverteilungsnetz (1) oder auf Schätzungen einer Zustandsschätzungseinrichtung zu basieren.

14. Leitstellenanordnung nach einem der Ansprüche 8 bis 13, **dadurch gekennzeichnet, dass** die steuerbaren Betriebsmittel mindestens eines der folgenden Betriebsmittel aufweisen: Kondensatoren, Stufenschalter von Transformatoren, Netzspannungsregler, intelligente Stromrichter, Leistungsschalter.

15. Computerprogrammprodukt, das auf einem dauerhaften Datenträger speicherbar ist und ausgebildet ist, bei Ausführung auf einer Rechnereinrichtung mit Prozessormitteln und einem Datenspeicher das Verfahren gemäß einem der Ansprüche 1 bis 7 durchzuführen.
